Europäisches Patentamt

European Patent Office

Office européen des brevets

(11) Veröffentlichungsnummer: **0 190 321**
**B1**

(12) **EUROPÄISCHE PATENTSCHRIFT**

(45) Veröffentlichungstag der Patentschrift: **28.11.90**

(51) Int. Cl.⁵: **B 23 Q 5/04**

(21) Anmeldenummer: **85904245.9**

(22) Anmeldetag: **19.08.85**

(86) Internationale Anmeldenummer:
**PCT/EP85/00424**

(87) Internationale Veröffentlichungsnummer:
**WO 86/01139 27.02.86 Gazette 86/05**

(54) **WERKZEUGKOPF FÜR ANGETRIEBENE WERKZEUGE.**

(30) Priorität: **17.08.84 DE 3430380**

(43) Veröffentlichungstag der Anmeldung:
**13.08.86 Patentblatt 86/33**

(45) Bekanntmachung des Hinweises auf die
Patenterteilung:
**28.11.90 Patentblatt 90/48**

(84) Benannte Vertragsstaaten:
**CH DE FR GB LI SE**

(56) Entgegenhaltungen:
**DE-A-1 552 324**
**DE-A-2 500 446**
**DE-A-3 202 042**
**FR-A-2 284 400**
**FR-A-2 364 092**
**GB-A-2 126 134**
**US-A-2 430 522**

(73) Patentinhaber: **Boehringer Werkzeugmaschinen GmbH**
**Stuttgarter Strasse 50 Postfach 220**
**D-7320 Göppingen (DE)**

(72) Erfinder: **HORSKY, Anton**
**Hauptstrasse 34**
**D-7321 Wangen (DE)**
Erfinder: **VOSS, Wolf-Dieter**
**Erlengrund 10**
**D-7325 Boll (DE)**

(74) Vertreter: **Vogeser, Werner, Dipl.-Ing. et al**
**Patentanwälte Hansmann & Vogeser Albert-Rosshaupter-Strasse 65**
**D-8000 München 70 (DE)**

**Beschreibung**

Die Erfindung betrifft einen Werkzeugkopf für angetriebene Werkzeuge am Revolver von Werkzeugmaschinen mit parallel zum Spannschaft des Werkzeugkopfes angeordnetem Antrieb. Ein Werkzeugkopf dient einmal zum Befestigen und Justieren von Werkzeugen auf dem Revolver einer Werkzeugmaschine und zum anderen wenn erforderlich, zur Vermittlung des Antriebs eines Werkzeugs.

Bekannt sind angetriebene Werkzeugköpfe zur Aufnahme eines einzigen Werkzeuges. Ferner ist bekannt, daß die Krafteinleitung zum Antrieb des Werkzeugs nicht auf der Spannachse des angetriebenen Werkzeugs anzubringen ist, sondern zur Mitte des Revolvers hin parallel versetzt wird, um die am äußeren, offenen zugänglichen Teil des Revolvers auftretende Verschmutzung von Werkzeug, Werkzeugkopf und Antriebseinheit durch Späne und Kühl- bzw. Schmiermittel zu vermeiden. Auf diese Weise wird auch der Werkzeugspannschaft, in dem auch bei gleichachsigem Antrieb die Antriebswelle laufen müsste, für eine eventuelle automatische Werkzeugspannvorrichtung freigehalten und die höhe der einzuleitenden Antriebskraft ist nicht dadurch begrenzt, daß, wie beim gleichachsigen Antrieb, der Außendurchmesser der Antriebswelle höchstens so groß wie der Innendurchmesser des Werkzeugspannschafts sein darf.

Zwar sind aus der DE—A—1 552 324 sowie der FR—A—2 364 092 Werkzeugköpfe mit jeweils mehr als einem angetriebenen Werkzeug bekannt, jedoch weisen diese Werkzeugköpfe nicht die oben beschriebene Gestaltung sowie Zuordnung bezüglich des Werkzeugrevolvers auf und auch nicht die Möglichkeit der leichten Nachrüstung.

Der Erfindung liegt daher die Aufgabe zugrunde, einen bestehenden Werkzeugkopf der eingangs beschriebenen Art für die Aufnahme eines weiteren angetriebenen Werkzeuges in einem zusätzlich anzuordnenden Spannfutter mit möglichst geringem Aufwand weiterzubilden.

Diese Aufgabe wird durch die Merkmale des Anspruchs 1 gelöst.

Das zusätzliche Futter zur Aufnahme eines Werkzeugs läuft in Antriebsrichtung mit der gleichen Drehzahl wie die Antriebswelle permanent um oder kann auch abkoppelbar und bzw. oder mit einem Zwischengetriebe versehen sein. Zu diesem Zweck muß nur die angetriebene Welle des Werkzeugkopfes zur Spindel mit Futter umgestaltet werden. Die Lagerung der Welle kann unverändert als Spindellagerung verwendet werden.

Der Vorteil der Erfindung besteht darin, daß auf diese Weise die das Netzungspotential einer Werkzeugmaschine maßgeblich mitbestimmende Anzahl der auf dem Revolver befindlichen Werkzeuge mit geringem Aufwand, auch nachträglich, stark vergrößert werden kann.

Die Erfindung wird nachstehend anhand der Figuren 1 bis 4 beispielsweise erläutert. Es zeigen

Fig. 1 einen Axialwerkzeugkopf in Seitenansicht,

Fig. 2 einen Axialwerkzeugkopf in Blickrichtung der Revolverdrehachse;

Fig. 3 einen Radialwerkzeugkopf in Seitenansicht;

Fig. 4 einen Radialwerkzeugkopf in Blickrichtung der Drehachse des Revolvers.

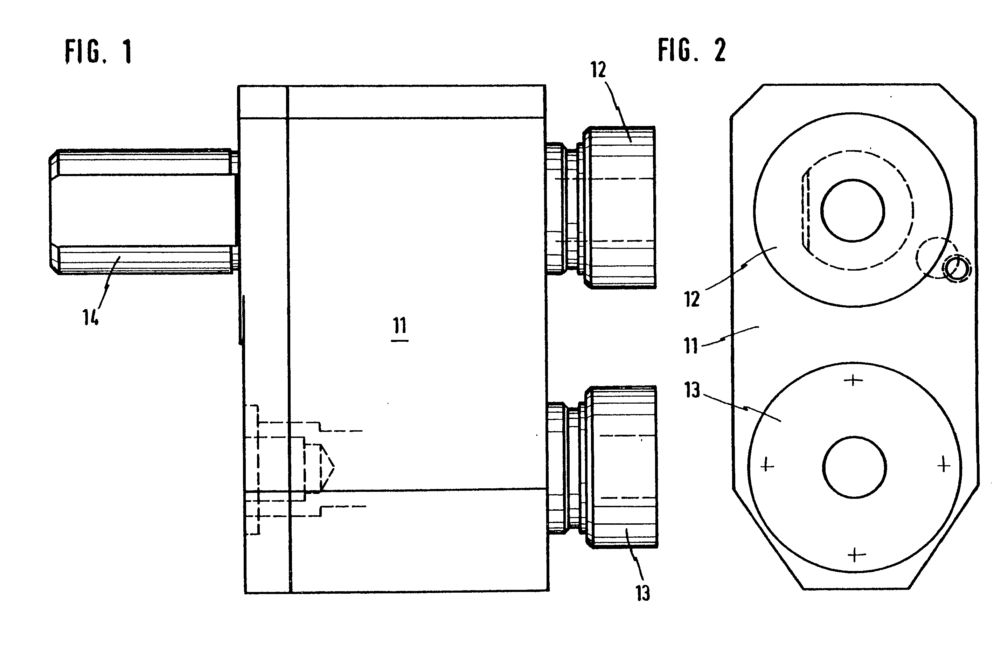

Fig. 1 zeigt einen Axialwerkzeugkopf 11. Der Spannschaft 14 zum Festspannen eines Werkzeugs im ursprünglichen, angetriebenen Futter 12 ist auf dessen Drehachse im äußeren Bereich der Revolverscheibe offen zugänglich angeordnet. Der Antrieb 15 ist dazu parallel versetzt innerhalb des Revolverbereichts angeordnet. Gleichachsig zum Antrieb 15 wurde das zusätzliche Futter 13 aufgesetzt.

Fig. 2 zeigt den gleichen Axialwerkzeugkopf 11 in Blickrichtung der Revolverdrehachse, die sich auf der verlängerten Verbindungslinie zwischen dem ursprünglichen Futter 12 und dem zusätlich aufgesetzten Futter 13 befindet.

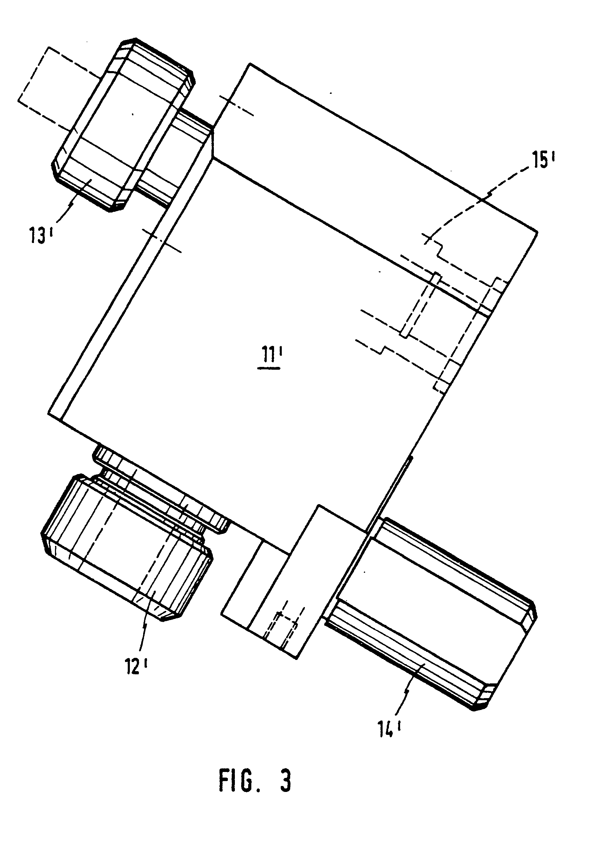

Fig. 3 zeigt einen Radialkwerkzeugkopf 11' in Seitenansicht, wobei der Spannschaft 14' des urprünglichen, angetriebenen Futters 12' zur Aufnahme eines Werkzeug winklig zu diesem angeordnet ist. Der Antrieb 15' des Werkzeugkopfes ist wiederum parallel zum Spannschaft 14' des ursprünglichen Futters 12' angeordnet, so daß das zusätzliche Axialfutter 13' wiederum gleichachsig mit dem Antrieb 15' angeordnet ist.

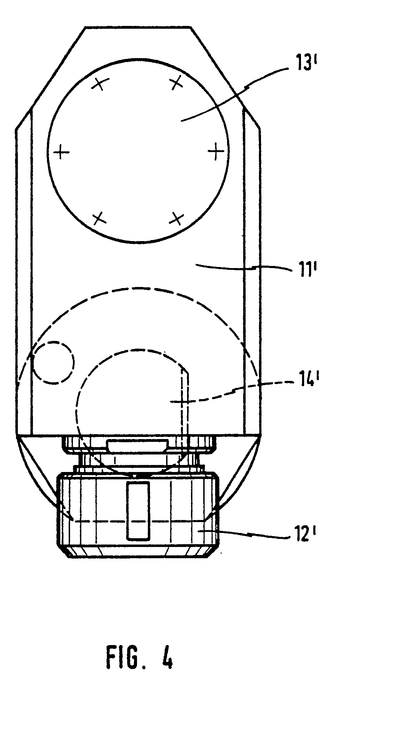

Fig. 4 zeigt den Radialwerkzeugkopf 11' der Fig. 3 in Blickrichtung der Revolverdrehachse, mit dem ursprünglichen, angetriebenen Futter 12' zur Aufnahme eines Werkzeugs und dessen winklig dazu angeordnetem Spannschaft 14', sowie dem zusätzlichen, auf der Achse des Antriebs 15' angebrachten Futter 13'. Das Futter 12' weist vom Revolverdrehpunkt, der sich auf der verlängertern Verbindungslinie der Futter 12' und 13' befindet, radial nach außen.

**Patentansprüche**

1. Werkzeugeinheit für Werkzeugmaschinen mit einem Werkzeugrevolver und wenigstens einem Werkzeugkopf (11) mit einem Spannfutter (12, 12') zur Aufnahme eines angetriebenen Werkzeuges, der auswechselbar am Werkzeugrevolver befestigt ist, wobei der Werkzeugkopf (11) einen Spannschaft (14) zum spannen des Werkzeugkopfes (11) im Revolver aufweist und eine hierzu parallel versetzt angeordnete Antriebswelle zum Antrieb des Spannfutters (12, 12') und wobei sich der Spannschaft (14) am äußeren Teil des Werkzeugrevolvers und der Antrieb (15) näher an der Mitte des Werkzeugrevolvers befinden, gekennzeichnet durch ein zusätzliches Spannfutter (13, 13') zur Aufnahme eines angetriebenen Werkzeuges, welches in axialer Verlängerung des Antriebs (15, 15') angeordnet und auf die Antriebswelle aufgesetzt ist, wobei das aufgesetzte Spannfutter (13', 13') von der die Antriebswelle tragenden Lagerung getragen wird.

2. Werkzeugeinheit nach Anspruch 1, dadurch gekennzeichnet, daß das zusätzliche Spannfutter (13, 13') vom Antrieb (15, 15') abkuppelbar ist.

3. Werkzeugeinheit nach Anspruch 1 oder 2, dadurch gekennzeichnet, daß das zusätzliche Spannfutter (13, 13') mit der gleichen Drehzahl wie der Antrieb (15, 15') umläuft.

**Revendications**

1. Unité d'outil pour machines-outil avec un revolver à outil et au moins un porte-outil (11) comportant un mandrin de serrage (12, 12') pour recevoir un outil entraîné qui est fixé de façon interchangeable sur le revolver à outil, le porte-outil présentant dans le revolver une tige de serrage (14) pour effectuer le serrage du porte-outil (11) et un arbre d'entraînement, disposé décalé et parallèle à celle-ci, pour l'entraînement du mandrin de serrage (12, 12'), et la tige de serrage (14) se trouvant sur la partie extérieure du revolver d'outil et l'entraînement (15) se trouvant plus près du centre du revolver d'outil, caractérisée par un mandrin de serrage (13, 13') supplémentaire, pour recevoir un outil entraîné, qui est disposé dans le prolongement axial de l'entraînement (15, 15') et appliqué sur l'arbre d'entraînement, le mandrin de serrage (13, 13') appliqué étant porté par le support qui porte l'arbre d'entraînement.

2. Unité d'outil selon la revendication 1, caractérisée en ce que le mandrin de serrage (13, 13') supplémentaire peut être désaccouplé de l'entraînement (15, 15').

3. Unité d'outil selon la revendication 1 ou 2, caractérisée en ce que le mandrin de serrage (13, 13') supplémentaire tourne à la même vitesse de rotation que l'entraînement (15, 15').

**Claims**

1. Tool unit for machine tools with a tool turret and at least one tool head (11) with a chuck (12, 12') for receiving a driven tool, removably and replaceably affixed to the tool turret, the tool head (11) having a clamping shaft (14) for clamping the tool head (11) in the turret, and having a driving shaft which is parallel and offset in relation thereto and which serves to drive the chuck (12, 12'), while the clamping shaft (14) is situated on the outer part of the tool turret and the drive (15) is situated closer to the middle of the tool turret, characterized by an additional chuck (13', 13') for receiving a driven tool, the said chuck being situated in the axial prolongation of the drive (15, 15') and mounted on the driving shaft, the attached chuck (13, 13') being supported by the bearing system which supports the driving shaft.

2. Tool unit in accordance with Claim 1 characterized by the fact that the additional chuck (13, 13') can be uncoupled from the drive (15, 15').

3. Tool unit in accordance with Claim 1 or 2 characterized by the fact that the additional chuck (13, 13') rotates at the same speed as the drive (15, 15').

FIG. 2

FIG. 1

13'

15'

11'

12'

14'

FIG. 3

2

FIG. 4